Europäisches Patentamt

European Patent Office

Office européen des brevets

(11) Numéro de publication : **0 122 824**
**B1**

(12) **FASCICULE DE BREVET EUROPÉEN**

(45) Date de publication du fascicule du brevet :
03.12.86

(51) Int. Cl.⁴ : **G 01 V 1/00**, G 01 V 1/36

(21) Numéro de dépôt : **84400470.5**

(22) Date de dépôt : **09.03.84**

(54) Procédé et dispositif pour l'optimisation des données sismiques.

(30) Priorité : **23.03.83 FR 8304740**

(43) Date de publication de la demande :
**24.10.84 Bulletin 84/43**

(45) Mention de la délivrance du brevet :
**03.12.86 Bulletin 86/49**

(84) Etats contractants désignés :
**AT DE FR GB IT NL**

(56) Documents cités :
**US-A- 3 326 320
US-A- 3 671 932
US-A- 4 234 938**

(73) Titulaire : **SOCIETE NATIONALE ELF AQUITAINE
(PRODUCTION)
Tour Aquitaine
F-92400 Courbevoie (FR)**

**COMPAGNIE GENERALE DE GEOPHYSIQUE
6, rue Galvani B.P. 56
F-91301 Massy Cedex (FR)**

(72) Inventeur : **Vannier, Serge
Labarthe-Inard
F-31800 Saint-Gaudens (FR)**
Inventeur : **Lozes, André
Quartier de Bellefont-Lasserre
F-31800 Saint-Gaudens (FR)**
Inventeur : **Vidal, Jean-Claude
Résidence Montvallier Place du Maréchal Juin
F-31800 Saint-Gaudens (FR)**
Inventeur : **Garotta, Robert
5 Allée de Malézieux
F-92290 Chatenay Malabry (FR)**

(74) Mandataire : **Levy, David et al
c/o S.A. Fedit-Loriot 38, avenue Hoche
F-75008 Paris (FR)**

## Description

La présente invention concerne un procédé et un dispositif pour l'optimisation des données sismiques et plus particulièrement pour une meilleure acquisition simultanée et sélective des données relatives à la couche de terrain située près de la surface et de celles relatives aux couches plus profondes.

En prospection sismique terrestre, on dispose sur ou près de la surface terrestre un ou plusieurs transducteurs d'émission ou émetteurs qui émettent un signal se propageant dans le milieu à explorer, et un ou plusieurs transducteurs de réception ou récepteurs qui reçoivent et enregistrent les ondes émises, après leurs réflexions sur les différents réflecteurs dudit milieu à explorer. En effet, une partie du signal se propage à travers les différentes formations lithologiques et se réfléchit sur les interfaces entre les couches dont les caractéristiques sismiques sont différentes. Les ondes ainsi réfléchies produisent ce qu'on appelle un sismogramme ou plus usuellement un ensemble de traces. Une trace représente le temps de trajet aller et retour de l'énergie sismique se propageant dans le milieu à explorer et réfléchie par les réflecteurs.

Les traces enregistrées sur les récepteurs séparés les uns des autres par une distance dénommée inter-trace par analogie à la distance séparant deux émetteurs consécutifs et dénommée inter-source, permettent d'obtenir des informations sur les couches lithologiques du milieu à explorer. En raison du temps d'émission du signal émis et du temps d'écoute pour que les ondes émises dans le milieu parviennent aux récepteurs, il est nécessaire de positionner ou caler les traces entre elles, faute de quoi le document comprenant tout ou partie des traces enregistrées ne serait pas interprétable.

De plus, il est absolument nécessaire de procéder à certaines corrections avant de procéder à l'établissement d'un certain nombre de documents tel que celui appelé « section-temps ». Mais il y a de nombreuses difficultés à surmonter.

La première est que les couches lithologiques du milieu à explorer présentent des caractères sismiques différents. Parmi ces couches lithologiques, la première est très importante. Cette première couche est appelée couche altérée en surface ou encore couche « WZ » qui est l'abréviation du terme anglais « Weathering Zone ». La caractéristique de vitesse par exemple, doit être connue aussi précisément que possible, car c'est elle qui déterminera ce qu'on appelle la correction statique qui est, en fait, la correction à faire sur les traces pour éliminer de celles-ci les effets dus à la couche « WZ » qui sera dénommée ensuite couche de surface. La correction statique relative à ladite couche de surface a donc pour but de ramener les temps des traces successives et par conséquent la forme des indicatrices, sur la section-temps, à ce qu'ils auraient été si la couche de surface n'avait pas existé, ou plus exactement, si les couches sous-jacentes à ladite couche de surface avaient existé jusqu'à la surface du sol, supposée horizontale.

Les géophysiciens connaissent l'importance de cette correction qui suit généralement une autre correction dite dynamique dont le but est d'obtenir une trace que l'on aurait directement obtenue sur le terrain si émetteurs-récepteurs avaient été confondus en un même point de la surface du sol. La connaissance de la vitesse de l'onde se propageant dans la couche de surface, le plus souvent très inférieure à celles des ondes se propageant dans les couches sous-jacentes étant, parmi d'autres caractéristiques, essentielle, on n'a pas hésité jusqu'à ce jour, à procéder à des mesures spécifiques à la couche de surface et donc, à utiliser des moyens importants pour atteindre le résultat recherché. Un de ces moyens consiste à forer un trou, à faire exploser une charge explosive disposée au fond du trou, à enregistrer les ébranlements dans le sol produits par l'explosion, puis à traiter les enregistrements.

D'autres méthodes connues consistent à utiliser les indicatrices en pointant les premières arrivées sur la section-temps, puis à déterminer par inter-corrélation des traces entre elles, le facteur de correction temps. De telles méthodes de correction statique sont décrites dans le brevet des Etats-Unis d'Amérique No. 4 069 471. D'autres méthodes sont décrites dans les brevets des Etats-Unis d'Amérique No. 3 681 749 et No. 4 101 867, ainsi que dans le brevet G. B. No. 1 379 460.

Toutefois, les procédés et dispositifs décrits dans ces brevets utilisent directement les indicatrices en essayant d'extraire les informations relatives à la couche de surface ou préconisent des moyens indépendants spécifiques à ladite couche de surface.

Quel que soit le procédé utilisé, il est nécessaire de séparer les mesures relatives à la couche altérée en surface de celles relatives aux couches lithologiques d'intérêt. En effet, les films sismiques obtenus ne permettent pas l'étude directe de la couche altérée en surface car, jusqu'à environ 600 ms, les effets dus à ladite couche altérée perturbent de façon trop importante lesdits films pour en tirer une information valable. Il s'ensuit que l'obligation de mesures distinctes obère grandement leur coût.

La présente invention a pour but de proposer un procédé et un dispositif de prospection sismique qui permettent en un même passage d'obtenir des films sismiques comprenant à la fois les informations relatives à la couche de surface et celles relatives aux couches profondes.

Un autre but de la présente invention est de recueillir en un seul passage toutes les informations et de réaliser ce que les géophysiciens appellent la haute résolution par une meilleure connaissance des caractéristiques des couches de surface et ce, grâce au fait que la présente invention permet de dissocier les informations relatives aux couches de surface de celles des couches sous-jacentes d'intérêt et ainsi d'atténuer au maximum les effets de filtrage des couches de surface par une meilleure connaissance. Il faut noter que ce sont les mêmes moyens de réception qui sont utilisés à la fois pour recueillir les informations des couches de surface et des couches sous-jacentes.

Ces buts sont atteints par le procédé selon la présente invention, qui consiste, sur un trajet d'exploration, à émettre à partir d'au moins une première source d'émission un premier signal long balayant un spectre de fréquences prédéterminé, à émettre un deuxième signal à partir d'une seconde source d'émission distincte et synchrone avec la première source, les énergies émises par les deux sources d'émission étant différentes, à recevoir sur des moyens de réception les ondes produites par lesdits signaux et se propageant dans le milieu à explorer, à enregistrer sous forme d'enregistrements les ondes reçues sur ledit moyen de réception, caractérisé en ce que la polarité du signal émis par la première source d'émission est inversée à chaque émission tandis que la polarité dudit signal émis par la seconde source d'émission est maintenue fixe, en ce que les enregistrements correspondant à la première source d'émission sont groupés par paires, les deux enregistrements de chaque paire comprenant deux signaux à polarité inverse, de manière à constituer un premier groupement de paires d'enregistrements, en ce que les enregistrements produits par la deuxième source d'émission sont groupés également par paires, de manière à constituer un deuxième groupement d'enregistrements, chaque paire du deuxième groupement correspondant à une seule paire d'enregistrements du premier groupement ; en ce qu'on traite les deux groupements d'enregistrements en fonction de l'optimisation des données relatives à chaque source d'émission, le traitement pour l'optimisation des données de la seconde source d'émission étant réalisé par addition des paires d'enregistrements du premier groupement et par addition des paires d'enregistrements du deuxième groupement, tandis que le traitement d'optimisation des données de la première source d'émission consiste à inverser la polarité, sur les enregistrements des signaux du premier groupement d'enregistrements des signaux du premier groupement d'enregistrements, qui est opposée à celle fixe des signaux du deuxième groupement, puis à faire la somme des enregistrements dans chacun desdits groupements ; et en ce qu'on intercorrèle le résultat de chacune desdites additions avec le signal commun émis par chacune desdites sources d'émission.

Ainsi, selon qu'on optimise les résultats du premier transducteur d'émission ou du second transducteur d'émission, on favorise les données concernant la couche de surface ou celles concernant les couches lithologiques sous-jacentes d'intérêt. Par ailleurs, on obtient des données très nettes et donc mieux interprétables.

Par ailleurs, le fait d'utiliser une même chaîne de récepteurs supprime les distorsions liées à l'utilisation de récepteurs différents.

Suivant une autre caractéristique de l'invention, le premier transducteur d'émission est constitué par un groupe de trois émetteurs émettant en synchronisme un même signal d'émission, tandis que le second transducteur d'émission est constitué par un quatrième émetteur unique disposé relativement loin du groupe des trois émetteurs. En fait, la distance séparant les trois émetteurs du quatrième sera fonction du cône de bruit spécifique à la couche de surface du milieu à explorer.

D'autres avantages et caractéristiques ressortiront mieux à la lecture de la description donnée ci-dessous à titre indicatif, mais non limitatif, d'un mode de réalisation préféré de l'invention, ainsi que du dessin annexé sur lequel :

la figure 1 est une représentation schématique et partielle d'un arrangement de prospection géophysique représentant les emplacements des émetteurs par rapport aux récepteurs ;

la figure 2 est un film synthétique susceptible d'être obtenu suivant l'un des procédés de l'art antérieur ;

la figure 3 est une représentation schématique de la polarité des signaux émis aux différents points d'émission ;

la figure 4 est un film sismique obtenu selon la présente invention et relatif à la couche de surface ;

la figure 5 est un film sismique relatif aux couches sous-jacentes à la couche de surface.

Sur la surface du sol 1 du milieu à explorer 2 et le long d'un trajet d'exploration, matérialisé par une flèche 3, on dispose une partie du dispositif d'exploration, étant précisé que les autres éléments dudit dispositif, et nécessaires au traitement des données recueillies sur le dispositif, ne sont pas représentés mais qu'ils sont bien connus des spécialistes. De même, le dispositif se déplace sur le trajet d'exploration suivant le flèche 3 mais il pourrait également se déplacer suivant la direction inverse.

Le dispositif comprend une première source d'émission constituée par trois émetteurs synchrones 4, du type vibrateurs tels que ceux utilisés dans le procédé connu sous la dénomination « Vibroseis ». Une seconde source d'émission 5, distincte de la première, est également constituée par un émetteur du type vibrateur, similaire ou identique aux émetteurs 4. L'émetteur 5 est synchrone avec les émetteurs 4 et situé à une certaine distance desdits émetteurs 4. Pour s'assurer que tous les émetteurs 4 et 5 sont bien synchrones, il est préférable de réaliser des tests de synchronisation au début de chaque série d'émissions, comme cela est d'usage lorsque des émetteurs synchrones sont utilisés, en prospection sismique.

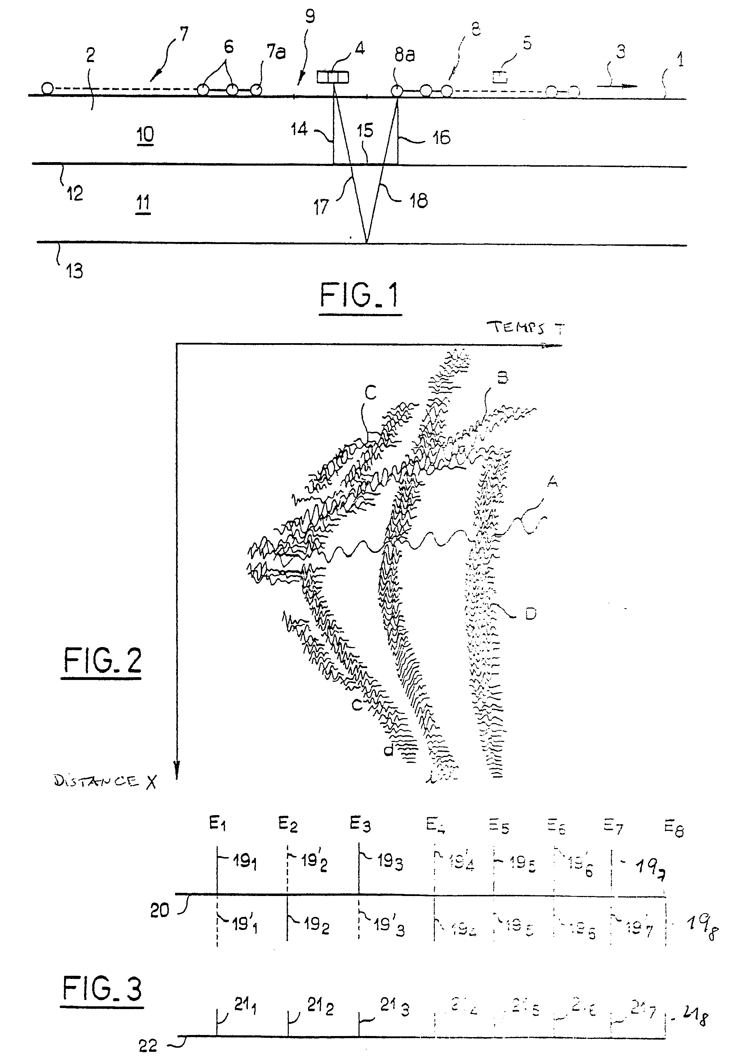

Le dispositif comprend également des moyens de réception constitués par des récepteurs alignés 6, régulièrement espacés entre eux. Dans l'exemple représenté sur la figure 1, les récepteurs sont disposés suivant deux lignes 7 et 8 de 48 récepteurs chacune, avec une fenêtre 9 entre les deux extrémités adjacentes 7a et 8a desdites lignes. Il va de soi qu'en lieu et place de 48 récepteurs disposés sur chaque ligne 7 ou 8, on peut utiliser par exemple 4 lignes parallèles de 12 récepteurs chacune pour avoir la couverture de 48 récepteurs et ce, pour chacune des lignes 7 ou 8. Dans ce cas, les émetteurs seraient situés au centre du dispositif de réception et l'émetteur 5 serait aligné avec les récepteurs étant précisé que tout ce qui sera décrit à propos de la figure 1 restera valable dans le cas des lignes parallèles. Dans l'exemple représenté la fenêtre ou la distance séparant les récepteurs 7a et 8a est de l'ordre de 450 m et de toutes les façons, très supérieure à la distance séparant deux récepteurs consécutifs 6, et qui dans les essais effectués est de 50 mètres.

Au premier point d'émission, les émetteurs synchrones 4 et 5 émettent un même signal d'une durée de 26 s et dont le spectre de fréquences est compris entre 12 et 70 Hz, la polarité des signaux émis par les émetteurs 4 et 5 étant par exemple positive. Les ondes produites par lesdits signaux vibratoires traversent une couche de surface 10 et les couches lithologiques d'intérêt dont une seule, 11, est représentée sur la figure 1. Les couches 10 et 11 sont séparées par un interface 12, tandis que les couches lithologiques sont séparées par un interface 13, considéré généralement comme sensiblement plan, au pendage près. Les ondes, dans la couche 10, suivent un trajet théorique vertical 14 jusqu'à l'interface 12, horizontal 15 puis à nouveau vertical 16 avant d'être reçu sur les récepteurs 8. Dans la couche 11, les ondes se réfléchissent sur l'interface ou réflecteur 13 avant d'être reçues sur les récepteurs 6, le trajet suivi par les ondes étant matérialisé par les références 17 et 18.

Sur chaque récepteur 8, les signaux reçus correspondent aux différents trajets des ondes dans le milieu à explorer et l'enregistrement de ces signaux reçus constitue une trace. La première arrivée sur la trace correspond au bruit ou signal non organisé se propageant dans la couche 10, suivant le trajet 14, 15, 16, tandis que les autres arrivées successives correspondent aux trajets, après réflexion sur les réflecteurs successifs, tels que 17 et 18. Ainsi, sur chaque trace seront enregistrés des signaux provenant de la réfraction sur l'interface 12 et de la réflexion sur l'interface 13. L'ensemble des traces, une fois le traitement réalisé, conduit à un film comme celui représenté sur la figure 2. Ce film, où certaines corrections sur les traces ont été faites, montre que dans sa partie inférieure, au fur et à mesure que l'on s'éloigne du point d'émission ou point de tri, le départ des traces en c, d, devient moins net, avec une amplitude de plus en plus faible, et qu'au-delà d'une certaine distance d, i, lesdits départs deviennent illisibles et totalement confondus avec les arrivées secondaires.

Dans la partie supérieure du film, en faisant abstraction de l'onde aérienne A, on distingue très nettement que le film est perturbé par un autre bruit organisé B dénommé en anglais le « ground roll », et que les traces sont déformées en C par les effets de la couche 10, notamment. Ce n'est qu'au niveau des réflecteurs plus profonds D que l'amplitude des signaux sur les traces devient plus importante.

De la figure 2, qui est une représentation d'un film synthétique, on peut en déduire qu'avec un dispositif classique, les données seront toujours dégradées par les bruits de toutes sortes et par les effets de la couche altérée de surface ou couche 10, les données utiles et significatives commençant à environ 1 200 ms.

Selon la présente invention, le procédé consiste à utiliser deux sources distinctes d'émission d'énergie, le rapport des énergies transmises étant différent de 1. C'est la raison pour laquelle la première source d'émission comporte trois émetteurs — en l'occurrence les émetteurs 4 — tandis que la deuxième source n'en comporte qu'un seul — l'émetteur 5 —.

Suivant une forme simplifiée du procédé selon l'invention et en référence à la figure 3, la polarité des signaux émis par les émetteurs 4 est matérialisée par des tirets en trait plein $19_1$ à $19_8$ disposés verticalement sur une ligne 20, tandis que la polarité des signaux émis par l'émetteur 5 est matérialisée par des tirets en trait plein $21_1$ à $21_8$ disposés verticalement sur une ligne 22, les deux lignes 20 et 22 ne signifiant rien, mais ont été disposées l'une au-dessus de l'autre pour la clarté de l'exposé, la différence de hauteur entre les tirets 19 et 20 signifiant que les énergies émises sont différentes.

Au point d'émission $E_1$, les émetteurs 4 et 5 émettent chacun un signal de polarité positive $19_1$ et $21_1$. Au point d'émission suivant $E_2$, la polarité des signaux émis par les émetteurs 4 est inversée, ce qui est matérialisé par le tiret $19_2$, tandis que l'émetteur 5 émet un même signal mais de polarité positive $21_2$. Au point d'émission $E_3$, on alterne à nouveau la polarité des signaux émis par les émetteurs 4 tout en gardant la même polarité positive pour les signaux de l'émetteur 5. Puis on recommence l'opération d'alternance jusqu'au dernier point d'émission $E_8$ par exemple. A titre indicatif, les points d'émission $E_1$ à $E_8$ sont séparés entre eux d'une distance de 8,33 m. Les signaux reçus sur les récepteurs 8 sont enregistrés et le traitement est effectué en fonction de l'optimisation souhaitée.

Le traitement comprend, quelle que soit l'optimisation souhaitée, des étapes de corrélation consistant à corréler chaque signal émis avec le signal correspondant reçu et d'enregistrer sur bande le résultat de ces corrélations.

Suivant l'invention et pour une optimisation relative à l'émetteur 5 par exemple, on groupe les enregistrements corrélés des émetteurs 4 par paires de façon que chaque paire comprenne un signal de polarité positive $19_1$ et un signal de polarité négative $19_2$. De la même façon, on groupe par paires les enregistrements corrélés de l'émetteur 5. Ainsi à la paire $19_1$ et $19_2$ va correspondre la paire $21_1$ et $21_2$. Les différentes

paires $19_1$ et $19_2$, $19_3$ et $19_4$, $19_5$ et $19_6$ sont additionnées entre elles, le résultat de l'addition étant sensiblement nul ou presque nul à raison des polarités inverses des signaux émis. Les différentes paires $21_1$ et $21_2$, $21_3$ et $21_4$, $21_5$ et $21_6$ sont également additionnées entre elles, le résultat de cette addition étant largement positif, la polarité des signaux étant la même. Ces deux résultats d'addition sont corrélés avec le signal émis pour affiner la signature finale.

De ce qui précède, on peut aisément concevoir l'optimisation des données relatives aux émetteurs 4. En effet, dans le premier groupement des enregistrements $19_1$ à $19_6$, on inverse la polarité des signaux de rang pair ou impair suivant la polarité choisie. Par exemple, si on veut un résultat d'addition dirigé vers le haut, on inverse la polarité des signaux de rang pair tels que $19_2$, $19_4$ et $19_6$. Dans le deuxième groupement des enregistrements $21_1$ à $21_6$, on inverse la polarité des signaux pair ou impair. Puis on additionne et on intercorrèle comme précédemment de façon à favoriser nettement les données relatives aux émetteurs 4 par rapport à celles relatives à l'émetteur 5 dont le résultat de l'addition des signaux est nul ou presque nul.

Suivant une autre mise en œuvre du procédé selon l'invention, en chaque lieu d'émission $E_1$ à $E_8$, les émetteurs 4 émettent deux fois, une première fois avec un signal de polarité positive $19_1$ par exemple et la deuxième fois avec le même signal, mais de polarité négative tel que $19_1$. Simultanément aux émetteurs 4, l'émetteur 5 émet le même signal mais toujours d'énergie différente et avec une polarité constante, positive par exemple, soit les signaux $21_1$ à $21_7$ de la figure 3.

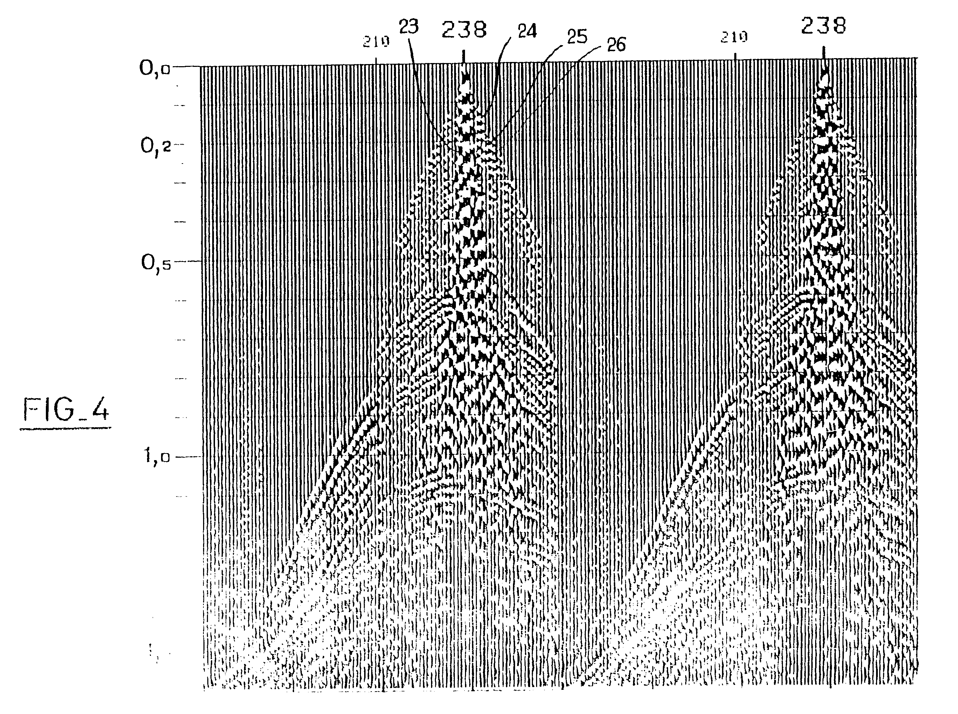

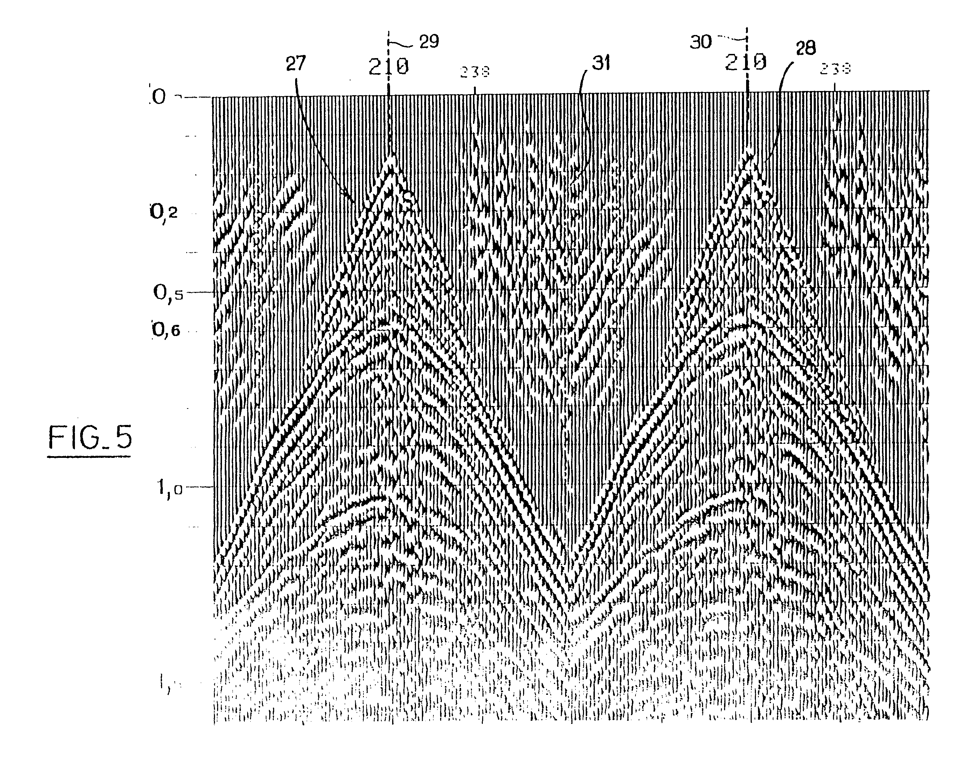

L'addition et la corrélation des enregistrements des deux groupements produisent des films sismiques tels que ceux représentés sur les figures 4 et 5.

On a porté en ordonnées les temps en secondes et en abscisses les points d'émission, 210 étant un point d'émission des émetteurs 4 tandis que 238 est un point d'émission de l'émetteur 5.

Le film sismique de la figure 4 correspond à une optimisation des données relatives à l'émetteur 5 dont le rôle, conformément à l'invention, est de réunir le maximum d'informations sur la couche de surface puisque par définition l'émetteur 5 présente un niveau d'énergie nettement inférieur à celle produite par les émetteurs 4.

Dans le cas précis représenté, le film est le résultat de deux émissions de l'émetteur 5 au point d'émission 238, mais on ne discutera que d'un seul produit de corrélation, celui de gauche par exemple.

Sur ce film, on constate qu'on est en présence d'un cône de bruit 23 situé au centre et de faible angle au sommet. Les premières traces 24, situées entre 0 et 200 ms, sont très perturbées par l'émetteur 5. Mais dès 200 ms, on constate des petites réflexions 25, 26 à caractère haute fréquence, lesdites réflexions s'étant produites sur les premières couches de terrain de la couche de surface 10, situées bien au-dessus de l'interface 12. Ces petites réflexions bien visibles sur le film sismique de la figure 4 sont nettement plus distinctes que sur le film sismique de la figure 5, comme nous le verrons plus loin.

Lorsqu'on regarde quelle est l'influence des signaux émis par les émetteurs 4 au point d'émission 210, on s'aperçoit que jusqu'à environ 600 ms, le film sismique de la figure 4 est peu perturbé.

Ainsi donc les premiers réflecteurs utiles de la couche de surface 10 vont être utilisés pour déterminer les horizons superficiels de ladite couche de surface, notamment avec l'aide de carottage sismique qui est utilisé dans les terrains où les couches lithologiques n'ont pas de structure constante ou présentant des variations de vitesse. Il sera donc possible, en conséquence, de « pointer » un horizon superficiel en temps qui sera calé par le carottage en horizon profondeur. En d'autres termes cela signifie que connaissant la vitesse de propagation dans la couche de surface 10 grâce au carottage et la position des premiers réflecteurs 25, 26, on détermine la profondeur desdits réflecteurs 25, 26.

Cette meilleure localisation des premiers réflecteurs 25, 26 permet de réduire la couche de surface et de donner une valeur de la correction statique à appliquer aux couches profondes de façon à ramener celles-ci à un même plan horizontal et d'éliminer les variations de temps sur les horizons profonds qui ne seraient dues qu'à un ralentissement des ondes sismiques dans la couche de surface.

En se référant à la figure 5, on peut y voir que le film sismique comprend également deux parties, l'une 27 correspondant à l'émission des signaux au point d'émission 210, et à l'addition et la corrélation des enregistrements des signaux correspondants ayant tous la même polarité négative par exemple, tandis que l'autre 28 correspond à l'émission des mêmes signaux au même point d'émission 210, avec addition et corrélation de signaux ayant tous une polarité positive. Cela est nettement visible sur la figure 5 où, lorsqu'on suit la ligne 200 ms, on constate que la partie 27 est noire, à l'intersection de la verticale 29 passant par le point 210 avec l'horizontale 200 ms, tandis que la partie 28 est blanche à l'intersection d'une verticale 30 passant par le point d'émission 210 avec l'horizontale 200 ms.

Ces deux parties 27 et 28 ne sont pratiquement pas altérées par l'émetteur 5 au point d'émission 238 et dont les effets sont localisés entre lesdites parties 27 et 28 et représentés par un bruit 31.

Une étude du film sismique de la figure 5 montre qu'entre 0 et 150 ms, on ne peut rien analyser et que les premiers réflecteurs ou horizons profonds sont situés à environ 600 ms. Entre 150 et 600 ms, l'interprétation du film est difficilement réalisable car il s'agit manifestement d'un bruit organisé ou de petites réflexions ou tout autre événement dont on ne peut dire s'il est d'intérêt ou non. Toutefois grâce à la qualité du film sismique obtenu selon la présente invention, on peut valablement affirmer que les horizons profonds d'intérêt commencent à partir de 500 ms alors qu'en se reportant à la figure 4, lesdits horizons profonds ne commencent que vers 700 ms. De plus et toujours en comparant les deux films sismiques des figures 4 et 5, on voit que les atténuations sont beaucoup plus faibles et qu'entre 1 s et 1,5 s le film sismique de la figure 5 est encore exploitable pour refléter clairement un événement à 1,05 s.

Ainsi, la possibilité d'avoir, dans un même passage, les données relatives à la couche de surface 10, réunies sur la figure 4, et les données relatives aux horizons profonds, réunies sur la figure 5, permet non seulement de remonter le front de la couche de surface 10 le plus près possible de la surface du sol 1, mais également de déterminer la correction statique à effectuer sur les différentes traces de manière à avoir un document exploitable.

Les exemples donnés en référence aux figures 1 à 5 ont été effectués soit pour une émission des émetteurs 4 et 5 à chaque point d'émission $E_1$ à $E_8$, soit deux émissions des émetteurs 4 et une émission de l'émetteur 5 en chaque point d'émission, le pas d'avancement du dispositif étant dans les deux cas de 8,66 m qui est l'espacement constant entre deux points d'émission $E_1$ à $E_8$.

On pourrait également prévoir une autre façon de déplacer le dispositif sans rien changer au procédé selon l'invention. C'est ainsi que des essais satisfaisants ont été réalisés avec les paramètres suivants :

Essai 1

a. Trois émetteurs 4 à polarisation alternée.
b. Durée d'émission de chaque signal émis par les émetteurs 4 : 26 s.
c. Bande de fréquences du signal émis par chacun des émetteurs 4 : 12-70 Hz.
d. Six points d'émission $E_1$ à $E_6$ espacés de 8,33 m.
e. Une émission des émetteurs 4 en chaque point d'émission.
f. Un émetteur 5 à polarisation bloquée et disposé à 1 400 m des émetteurs 4.
g. Durée d'émission du signal émis par l'émetteur 5 : 26 s.
h. Bande de fréquences du signal émis par l'émetteur 5 : 12-70 Hz.
i. Dispositif de 96 récepteurs espacés de 50 m avec fenêtre 9 au centre de 450 m, et temps total d'enregistrement 26 s + 5 s.
j. Deux émissions de l'émetteur 5 en chaque point d'émission mais en déplaçant ledit émetteur 5 de 16,66 m entre deux émissions successives.

Dans ce cas, on constate une légère amélioration des départs des enregistrements aux environs immédiats de l'émetteur 5 sur les films d'exploitation normale, l'élimination des bruits organisés se faisant évidemment mieux par soustraction en un même point d'émission.

Essai 2

On utilise les mêmes paramètres de l'essai 1, mais en modifiant b et g qui sont respectivement de 16 s et 4 s plus les 5 s du temps d'écoute.

Le découplage de ces durées d'émission venant s'ajouter aux effets de composition apporte des résultats encore meilleurs. Le film sismique relatif aux horizons ne comprend pratiquement pas de phénomènes analogues à ceux référencés 31 sur la figure 5 et dus à l'émetteur 5.

Essai 3

On utilise les paramètres b, c, d, g, h, i avec comme nouveaux paramètres :
a. Trois émetteurs 4 à polarisation négative bloquée.
e. Deux émissions des émetteurs 4 en chaque point d'émission.
f. Un émetteur 5 à polarisation alternée et disposé à 1 400 m des émetteurs 4.
j. Deux émissions de l'émetteur 5 en chaque point d'émission mais en déplaçant ledit émetteur 5 d'un pas de 8,33 m entre deux points d'émission.

Le résultat est l'obtention d'un film sismique relatif à l'émetteur 5 d'excellente qualité.

Bien entendu, l'invention n'est nullement limitée au mode de réalisation de l'exemple décrit et représenté, elle est susceptible de nombreuses variantes accessibles à l'homme de l'art, suivant les applications envisagées et sans s'écarter pour cela du cadre de l'invention.

**Revendications**

1. Procédé d'optimisation des données sismiques au cours d'une exploration d'un milieu, du type consistant, sur un trajet d'exploration, à émettre à partir d'au moins une première source d'émission d'un premier signal long vibratoire ayant un spectre de fréquences prédéterminé, à émettre au même instant un deuxième signal vibratoire à partir d'au moins une seconde source d'émission distincte de la première source, les énergies émises par les deux sources d'émission étant différentes, à recevoir sur des moyens de réception les ondes produites par lesdits signaux et se propageant dans le milieu à explorer, à enregistrer sous forme d'enregistrements les ondes reçues sur ledit moyen récepteur, caractérisé en ce que le sens (ou polarité) du signal émis par la première source d'émission est inversé à chaque émission tandis que la polarité dudit signal émis par la seconde source d'émission est maintenue fixe, en ce que les enregistrements correspondant à la première source d'émission sont groupés par paires, les deux enregistrements de chaque paire comprenant deux signaux à polarité inverse, de manière à constituer un premier groupement de paires d'enregistrements ; en ce que les enregistrements produits par la deuxième source d'émission sont groupés également par paires, de manière à constituer un deuxième groupement d'enregistrements, chaque paire du deuxième groupement correspondant à une seule paire d'enregistrements du premier groupement ; en ce qu'on traite les deux groupements d'enregistrements en fonction de l'optimisation des données relatives à chaque source d'émission, le traitement pour l'optimisation des données de la seconde source d'émission étant réalisé par addition des paires d'enregistrements du premier groupement et par addition des paires d'enregistrements du deuxième groupement, tandis que le traitement d'optimisation des données de la première source d'émission consiste à inverser la polarité, sur les enregistrements des signaux du premier groupement d'enregistrements, qui est opposée à celle fixe des signaux du deuxième groupement, puis à faire la somme des enregistrements dans chacun desdits groupements ; et en ce qu'on intercorrèle le résultat de chacune desdites additions avec le signal commun émis par chacune desdites sources d'émission.

2. Procédé selon la revendication 1, caractérisé en ce que la première source d'émission est constituée par au moins deux émetteurs synchrones.

3. Procédé selon la revendication 1, dans lequel les sources d'émission et les moyens de réception comprenant plusieurs récepteurs régulièrement espacés, sont déplacés ensemble d'un point d'émission à un autre point d'émission, lesdits points d'émission étant séparés d'un pas constant sur le trajet d'exploration, caractérisé en ce que lesdits récepteurs sont disposés suivant au moins deux lignes distinctes en prolongement l'une de l'autre mais dont les extrémités adjacentes sont séparées par un intervalle supérieur à la distance séparant deux récepteurs consécutifs.

4. Procédé selon la revendication 3, caractérisé en ce que la distance séparant les sources d'émission est très supérieure à la distance séparant deux récepteurs consécutifs.

5. Procédé selon la revendication 3, caractérisé en ce que la seconde source d'émission est déplacée entre deux de ses émissions consécutives d'une distance égale à deux pas.

6. Procédé selon la revendication 5, caractérisé en ce que, en chaque point d'émission, la seconde source d'émission émet deux fois consécutivement le même signal.

7. Procédé selon la revendication 3, caractérisé en ce que, en chaque point d'émission, chacune des sources émet deux fois consécutivement.

8. Procédé selon l'une des revendications 1 à 7, caractérisé en ce que la durée du signal émis par la première source est égale à la durée du signal émis par la seconde source.

9. Procédé selon l'une des revendications 1 à 5, caractérisé en ce que la durée du signal émis par la première source est supérieure à celle du signal émis par la seconde source.

10. Procédé selon la revendication 9, caractérisé en ce que le rapport des durées des signaux émis par les deux sources d'émission est égal à 4.

11. Procédé selon l'une des revendications 1 à 10, caractérisé en ce que la durée du signal émis par la première source est égale à 16 s et le spectre de fréquences dudit signal compris entre 12 et 70 Hz.

12. Dispositif pour la mise en œuvre du procédé selon les revendications 1 à 11, du type comprenant sur un trajet d'exploration au moins une première source d'émission ; au moins une seconde source d'émission, distincte de la première source d'émission ; des récepteurs régulièrement espacés entre eux, recevant les ondes se propageant dans le milieu à explorer et enregistrant lesdites ondes reçues sous forme de traces, caractérisé en ce que la distance séparant les deux sources d'émission est telle que l'ensemble des traces produites par une des sources d'émission n'interfère pas avec l'ensemble des traces produites par l'autre source d'émission lorsque les deux ensembles de traces sont sur une même section-temps.

13. Dispositif selon la revendication 12, caractérisé en ce que les récepteurs sont disposés suivant au moins deux lignes distinctes, en prolongement l'une de l'autre mais dont les extrémités adjacentes sont séparées par un intervalle supérieur à la distance séparant deux récepteurs consécutifs.

14. Dispositif selon la revendication 13, caractérisé en ce que l'intervalle est de l'ordre de 450 m.

15. Dispositif selon les revendications 13 ou 14, caractérisé en ce que la première source d'émission est disposée au centre de l'intervalle.

16. Dispositif selon la revendication 12, caractérisé en ce que la seconde source d'émission est séparée de la première source d'émission d'une distance égale à 1 400 m.

17. Dispositif selon l'une des revendications 12 à 16, caractérisé en ce que les pas d'avancement des deux sources d'émission sont égaux.

18. Dispositif selon la revendication 12, caractérisé en ce que les pas d'avancement des deux sources d'émission sont différents, le pas d'avancement de la seconde source étant double du pas d'avancement de la première source d'émission.

19. Dispositif selon l'une des revendications 12 à 18, caractérisé en ce que la première source est constituée par au moins deux émetteurs synchrones.

20. Dispositif selon l'une des revendications 12 à 18, caractérisé en ce que la seconde source d'émission est constituée par un émetteur unique synchrone avec les émetteurs de la première source d'émission.

21. Dispositif selon l'une des revendications 19 et 20, caractérisé en ce que les émetteurs sont des vibrateurs.

22. Dispositif selon la revendication 21, caractérisé en ce que les vibrateurs émettent chacun des signaux longs dont le spectre de fréquences est compris entre 12 et 70 Hz et dont la durée est comprise entre 4 et 26 s.

23. Dispositif selon la revendication 22, caractérisé en ce que la durée de chaque signal émis par la première source d'émission est égale à 16 s, tandis que la durée de chaque signal émis par la seconde source est égale à 4 s.

## Claims

1. Process for the optimization of seismic data during an exploration of a medium, of the type consisting, on an exploration path, in emitting from at least one first source of emission a first long vibratory signal having a predetermined spectrum of frequencies, in emitting at the same instant a second vibratory signal from at least one second source of emission distinct from the first source, the energies emitted by the two sources of emission being different, in receiving on receiving means the waves produced by the said signals and propagating in the medium to be explored, in recording in the form of recordings the waves received at the said receiving means, characterized in that the sense (or polarity) of the signal emitted by the first source of emission is reversed at each emission, while the polarity of the said signal emitted by the second source of emission is maintained fixed, in that the recordings corresponding to the first source of emission are grouped in pairs, the two recordings of each pair including two signals of reverse polarity, in such a manner as to constitute a first grouping of pairs of recordings ; in that the recordings produced by the second source of emission are likewise grouped in pairs, in such a manner as to constitute a second grouping of recordings, each pair of the second grouping corresponding to a single pair of recordings of the first grouping ; in that the two groupings of recordings are processed as a function of the optimization of the data relating to each source of emission, the processing for the optimization of the data of the second source of emission being achieved by addition of the pairs of recordings of the first grouping and by addition of the pairs of recordings of the second grouping, while the processing for optimization of the data of the first source of emission consists in reversing the polarity, on the recordings of the signals of the first grouping of recordings, which polarity is opposite to the fixed polarity of the signals of the second grouping, and then in forming the sum of the recordings in each of the groupings ; and in that the result of each of the said additions is cross-correlated with the common signal emitted by each of the said sources of emission.

2. Process according to Claim 1, characterized in that the first source of emission is constituted by at least two synchronous emitters.

3. Process according to Claim 1, wherein the sources of emission and the receiving means comprising a plurality of regularly-spaced receivers are displaced together from one point of emission to another point of emission, the said points of emission being separated by a constant step on the exploration path, characterized in that the said receivers are disposed along at least two distinct lines which extend one another but the adjacent extremities of which are separated by an interval exceeding the distance separating two consecutive receivers.

4. Process according to Claim 3, characterized in that the distance separating the sources of emission is very much greater than the distance separating two consecutive receivers.

5. Process according to Claim 3, characterized in that the second source of emission is displaced between two of its consecutive emissions by a distance equal to two steps.

6. Process according to Claim 5, characterized in that, at each point of emission, the second source of emission emits the same signal twice consecutively.

7. Process according to Claim 3, characterized in that, at each point of emission, each of the sources emits twice consecutively.

8. Process according to one of Claims 1 to 7, characterized in that the duration of the signal emitted by the first source is equal to the duration of the signal emitted by the second source.

9. Process according to one of Claims 1 to 5, characterized in that the duration of the signal emitted by the first source exceeds that of the signal emitted by the second source.

10. Process according to Claim 9, characterized in that the ratio of the durations of the signals emitted by the two sources of emission is equal to 4.

11. Process according to one of Claims 1 to 10, characterized in that the duration of the signal emitted by the first source is equal to 16 s and the spectrum of frequencies of the said signal is in the range between 12 and 70 Hz.

12. System for carrying out the process according to Claims 1 to 11, of the type comprising, on an exploration path, at least one first source of emission ; at least one second source of emission distinct from the first source of emission ; receivers regularly spaced from one another, receiving the waves propagating in the medium to be explored and recording the said waves received in the form of traces, characterized in that the distance separating the two sources of emission is such that the set of traces produced by one of the sources of emission does not interfere with the set of traces produced by the other source of emission when the two sets of traces are on an individual time section.

13. System according to Claim 12, characterized in that the receivers are disposed along at least two distinct lines, which extend one another but the adjacent extremities of which are separated by an interval exceeding the distance separating two consecutive receivers.

14. System according to Claim 13, characterized in that the interval is of the order of 450 m.

15. System according to Claims 13 or 14, characterized in that the first source of emission is disposed at the centre of the interval.

16. System according to Claim 12, characterized in that the second source of emission is separated from the first source of emission by a distance equal to 1 400 m.

17. System according to one of Claims 12 to 16, characterized in that the steps of advancement of the two sources of emission are equal.

18. System according to Claim 12, characterized in that the steps of advancement of the two sources of emission are different, the step of advancement of the second source being twice the step of advancement of the first source of emission.

19. System according to one of Claims 12 to 18, characterized in that the first source is constituted by at least two synchronous emitters.

20. System according to one of Claims 12 to 18, characterized in that the second source of emission is constituted by a single emitter synchronous with the emitters of the first source of emission.

21. System according to one of Claims 19 and 20, characterized in that the emitters are vibrators.

22. System according to Claim 21, characterized in that the vibrators each emit long signals, the spectrum of frequencies of which is within the range between 12 and 70 Hz and the duration of which is within the range between 4 and 26 s.

23. System according to Claim 22, characterized in that the duration of each signal emitted by the first source of emission is equal to 16 s, while the duration of each signal emitted by the second source is equal to 4 s.

## Patentansprüche

1. Verfahren zur Optimierung von seismischen Daten bei der Untersuchung eines Geländes, bei dem an einer Untersuchungsstrecke von mindestens einer ersten Sendequelle ein erstes langes Schwingungssignal mit einem vorgegebenen Frequenzspektrum ausgesendet wird, gleichzeitig von mindestens einer von der ersten Quelle verschiedenen zweiten Sendequelle ein zweites Schwingungssignal ausgesendet wird, wobei die von den beiden Sendequellen ausgesandten Energien unterschiedlich sind, bei dem ferner an einer Empfangseinrichtung die von den genannten Signalen erzeugten und sich durch das zu untersuchende Gelände ausbreitenden Wellen empfangen und die an der Empfangseinrichtung empfangenen Wellen in Form von Aufzeichnungen registriert werden, dadurch gekennzeichnet, daß das Vorzeichen (oder die Polarität) des von der ersten Sendequelle ausgesandten Signals bei jeder Aussendung invertiert wird, während die Polarität des von der zweiten Sendequelle ausgesandten Signals festgehalten wird ; daß die der ersten Sendequelle entsprechenden Aufzeichnungen paarweise gruppiert werden, wobei die beiden Aufzeichnungen jedes Paares zwei Signale umgekehrter Polarität umfassen, so daß eine erste Gruppierung von Aufzeichnungspaaren gebildet wird ; daß die von der zweiten Sendequelle erzeugten Aufzeichnungen ebenfalls paarweise gruppiert werden, so daß eine zweite Gruppierung von Aufzeichnungen gebildet wird, wobei jedes Paar der zweiten Gruppierung einem einzigen Paar von Aufzeichnungen der ersten Gruppierung entspricht ; daß die beiden Gruppierungen von Aufzeichnungen zur Optimierung der auf jede Sendequelle bezogenen Daten verarbeitet werden, wobei die Verarbeitung zur Optimierung der Daten der zweiten Sendequelle durch Addition der Aufzeichnungspaare der ersten Gruppierung und durch Addition der Aufzeichnungspaare der zweiten Gruppierung realisiert wird, während die Optimierungs-Verarbeitung der Daten der ersten Sendequelle in einer Invertierung der Polarität bei den Signalaufzeichnungen der ersten Aufzeichnungsgruppierung besteht, die zu der festen Polarität der Signale der zweiten Gruppierung entgegengesetzt ist, woraufhin die Summe der Aufzeichnungen in jeder der genannten Gruppierungen gebildet wird, und daß das Ergebnis jeder dieser Additionen mit dem von jeder der genannten Sendequellen ausgesandten gemeinsamen Signal korreliert wird.

2. Verfahren nach Anspruch 1, dadurch gekennzeichnet, daß die erste Sendequelle aus mindestens zwei synchronen Sendern besteht.

3. Verfahren nach Anspruch 1, bei dem die Sendequellen und die mehrere in regelmäßigen Abständen angeordnete Empfänger aufweisende Empfangseinrichtung gemeinsam von einer Sendestelle an eine andere Sendestelle versetzt werden, wobei diese Sendestellen längs der Untersuchungsstrecke um eine konstante Teilung voneinander entfernt sind, dadurch gekennzeichnet, daß die Empfänger längs mindestens zweier verschiedener, miteinander fluchtender Linien angeordnet sind, deren benachbarte Enden um ein Intervall voneinander getrennt sind, das größer ist als der Abstand zwischen zwei aufeinanderfolgenden Empfängern.

4. Verfahren nach Anspruch 3, dadurch gekennzeichnet, daß der Abstand zwischen den Sendequellen viel größer ist als der Abstand zwischen zwei aufeinanderfolgenden Empfängern.

5. Verfahren nach Anspruch 3, dadurch gekennzeichnet, daß die zweite Sendequelle zwischen zwei ihrer aufeinanderfolgenden Aussendungen um eine Strecke von zwei Teilungen versetzt wird.

6. Verfahren nach Anspruch 5, dadurch gekennzeichnet, daß an jeder Sendestelle die zweite Sendequelle das gleiche Signal zweimal hintereinander aussendet.

7. Verfahren nach Anspruch 3, dadurch gekennzeichnet, daß an jeder Sendestelle jede Quelle zweimal hintereinander sendet.

8. Verfahren nach einem der Ansprüche 1 bis 7, dadurch gekennzeichnet, daß die Dauer des von der ersten Quelle ausgesandten Signals gleich der Dauer des von der zweiten Quelle ausgesandten Signals ist.

9. Verfahren nach einem der Ansprüche 1 bis 5, dadurch gekennzeichnet, daß die Dauer des von der ersten Quelle ausgesandten Signals länger ist als diejenige des von der zweiten Quelle ausgesandten Signals.

10. Verfahren nach Anspruch 9, dadurch gekennzeichnet, daß das Verhältnis der Dauer des von der einen Sendequelle ausgesandten Signals zur Dauer des von der anderen Sendequelle ausgesandten Signals 4 beträgt.

11. Verfahren nach einem der Ansprüche 1 bis 10, dadurch gekennzeichnet, daß die Dauer des von der ersten Quelle ausgesandten Signals 16 s beträgt und das Frequenzspektrum dieses Signals zwischen 12 und 70 Hz liegt.

12. Anordnung zur Durchführung des Verfahrens nach den Ansprüchen 1 bis 11, umfassend an einer Untersuchungsstrecke mindestens eine erste Sendequelle ; mindestens eine von der ersten Sendequelle verschiedene zweite Sendequelle ; und in regelmäßigen Abständen voneinander angeordnete Empfänger, die die sich durch das zu untersuchende Gelände ausbreitenden Wellen empfangen und die empfangenen Wellen in Form von Spuren aufzeichnen, dadurch gekennzeichnet, daß der Abstand zwischen den beiden Sendequellen so gewählt ist, daß die Anordnung der von einer der Sendequellen erzeugten Spuren nicht mit der Anordnung der von der anderen Sendequelle erzeugten Spuren interferiert, wenn beide Spurenanordnungen über das gleiche Zeitprofil gehen.

13. Anordnung nach Anspruch 12, dadurch gekennzeichnet, daß die Empfänger längs mindestens zweier verschiedener, miteinander fluchtender Linien angeordnet sind, deren benachbarte Enden durch ein Intervall voneinander getrennt sind, das größer ist als der Abstand zwischen zwei benachbarten Empfängern.

14. Anordnung nach Anspruch 13, dadurch gekennzeichnet, daß das Intervall in der Größenordnung von 450 m liegt.

15. Anordnung nach Anspruch 13 oder 14, dadurch gekennzeichnet, daß die erste Sendequelle in der Mitte des Intervalls angeordnet ist.

16. Anordnung nach Anspruch 12, dadurch gekennzeichnet, daß die zweite Sendequelle von der ersten Sendequelle in einem Abstand von 1 400 m angeordnet ist.

17. Anordnung nach einem der Ansprüche 12 bis 16, dadurch gekennzeichnet, daß die Teilungen, um die die beiden Sendequellen weiterbewegt werden, gleich sind.

18. Anordnung nach Anspruch 12, dadurch gekennzeichnet, daß die Teilungen, um die die beiden Sendequellen weiterbewegt werden, verschieden sind, wobei die Teilung, um die die zweite Quelle weiterbewegt wird, doppelt so groß ist wie die Teilung, um die die erste Sendequelle weiterbewegt wird.

19. Anordnung nach einem der Ansprüche 12 bis 18, dadurch gekennzeichnet, daß die erste Quelle aus mindestens zwei synchronen Sendern besteht.

20. Anordnung nach einem der Ansprüche 12 bis 18, dadurch gekennzeichnet, daß die zweite Sendequelle aus einem einzigen, mit den Sendern der ersten Sendequelle synchronen Sender besteht.

21. Anordnung nach Anspruch 19 oder 20, dadurch gekennzeichnet, daß die Sender Schwingungserzeuger sind.

22. Anordnung nach Anspruch 21, dadurch gekennzeichnet, daß die Schwingungserzeuger jeweils lange Signale aussenden, deren Frequenzspektrum zwischen 12 und 70 Hz und deren Dauer zwischen 4 und 26 s liegt.

23. Anordnung nach Anspruch 22, dadurch gekennzeichnet, daß die Dauer jedes von der ersten Sendequelle ausgesandten Signals 16 s beträgt, während die Dauer jedes von der zweiten Quelle ausgesandten Signals 4 s beträgt.

FIG. 1

FIG. 2

TEMPS T

DISTANCE X

FIG. 3

FIG_4

FIG_5

0 122 824